(19) Europäisches Patentamt
European Patent Office
Office européen des brevets

(11) **EP 3 730 762 A1**

(12) **EUROPEAN PATENT APPLICATION**

(43) Date of publication:
**28.10.2020 Bulletin 2020/44**

(51) Int Cl.:
**F02C 3/22** *(2006.01)*    **F02C 3/30** *(2006.01)*

(21) Application number: **20169868.5**

(22) Date of filing: **16.04.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.04.2019 US 201916393370**

(71) Applicant: **Pullen, Norman A.**
**Tulsa, OK 74127 (US)**

(72) Inventor: **Pullen, Norman A.**
**Tulsa, OK 74127 (US)**

(74) Representative: **D Young & Co LLP**
**120 Holborn**
**London EC1N 2DY (GB)**

(54) **JET ENGINE AND METHOD OF OPERATION**

(57)    A jet engine assembly and a method of operation in which nitrogen is removed from air using a nitrogen adsorption system to create an $O_2$-rich product which adds to the air combusted in the jet engine, thus reducing fuel usage. In addition, a nitrogen product produced by the nitrogen adsorption system is preferably used for producing greater thrust.

FIG. 1

# Description

## Field of the Invention

The present invention relates to a jet engine assembly and method of operation for providing increased fuel efficiency, improved performance, and greater thrust. The jet engine assembly and method of operation use an oxygen source which comprises a mixture of (a) air and (b) an oxygen-rich product which is produced from air.

## Background of the Invention

A continuing need exists for jet engines and jet engine assemblies and methods which provide greater fuel efficiency and which also provide improved performance and increased thrust.

## Summary of the Invention

The present invention provides a jet engine assembly and a method of operation in which nitrogen is removed from air to create an $O_2$-rich product. The $O_2$-rich product is injected into the combustion chamber, thus causing a larger explosion and more thrust and heat while also reducing the volume of fuel and gaining fuel economy. In addition a nitrogen product is also produced and preferably used for producing greater thrust. In one alternative, the basis for the increased thrust is that nitrogen is forced through a tube or duct that spirals the combustion chamber so that, as it gains heat, it cannot expand so its velocity increases. The flow of the hot nitrogen gas product into the turbine area causes higher gas velocity and thrust. The inventive jet engine assembly and method provide improvements in fuel efficiency of as much as 35% and thrust of as much as 35% or more. In addition, the oxygen and nitrogen products used in the inventive jet assembly and method are produced on demand from air and therefore do not require that any outside sources of oxygen or nitrogen be supplied and stored on-board.

In one aspect, there is provided a method of operating a jet engine to increase fuel efficiency, increase thrust, or a combination thereof, wherein the jet engine is powered by combusting a fuel with air and the method preferably comprises the steps of: (a) producing an oxygen-rich product from air using one or more pressure swing adsorption units which operate simultaneously with the jet engine and (b) delivering an amount of the oxygen-rich product to the jet engine which is used for combusting the fuel.

In another aspect, the method also preferably comprises the steps of: (c) producing a nitrogen product from the air using the one or more pressure swing adsorption units and (d) using the nitrogen product to provide increased thrust by delivering an amount of the nitrogen product (i) through one or more interior ducts extending through a combustion chamber within the inner housing, (ii) through one or more ducts which is/are positioned around the combustion chamber, (iii) into the inner housing between the combustion chamber and a low pressure exhaust turbine, or (iv) a combination thereof.

In another aspect, there is provided a jet engine assembly comprising: (1) one or more pressure swing adsorption units which produce an oxygen-rich product from air and (2) a jet engine. The jet engine preferably comprises: an outer housing having a forward air-intake end; an inner engine housing having at least a forward portion which is positioned within the outer housing, the inner engine housing further comprising (i) an air intake at a forward end of the inner engine housing and (ii) an internal combustion chamber within the inner engine housing; a by-pass air flow annulus formed between the inner engine housing and the outer housing; and an assembly within the inner engine housing comprising (i) a low pressure compressor and a high pressure compressor which are positioned forwardly of the internal combustion chamber and (ii) a high pressure exhaust turbine and a low pressure exhaust turbine which are positioned rearwardly of the internal combustion chamber. In addition, the jet engine assembly is preferably configured to deliver the oxygen-rich product produced by the one or more pressure swing adsorption units (i) into the air intake of the inner engine housing, (ii) into the inner engine housing forwardly of the internal combustion chamber, (iii) into the internal combustion chamber, or (iv) a combination thereof.

In another aspect, the jet engine assembly is also preferably configured to deliver a nitrogen product produced by the one or more pressure swing adsorption (i) through one or more interior ducts within the inner engine housing extending through the combustion chamber, (ii) through one or more ducts which is/are positioned around the combustion chamber, (iii) into the inner engine housing between the combustion chamber and the low pressure exhaust turbine, or (iv) a combination thereof.

Further aspects, features, and advantages of the present invention will be apparent to those in the art upon examining the accompanying drawings and upon reading the following Detailed Description of the Preferred Embodiments.

## Brief Description of the Drawings

Fig. 1 is a cutaway view which schematically illustrates an embodiment **2** of the jet engine assembly provided by the present invention.

Fig. 2 schematically illustrates a pressure swing adsorption unit **6** used in the inventive jet engine assembly **2.**

Fig. 3 is a cutaway end view of an adsorption media container **42a** or **42b** used in the pressure swing adsorption unit **6**.

Fig. 4 schematically illustrates an alternative embodiment **100** of the jet engine assembly provided by the present invention.

Fig. 5 illustrates two of the inventive jet engine assemblies **100** installed on a commercial aircraft.

## Detailed Description of the Preferred Embodiments

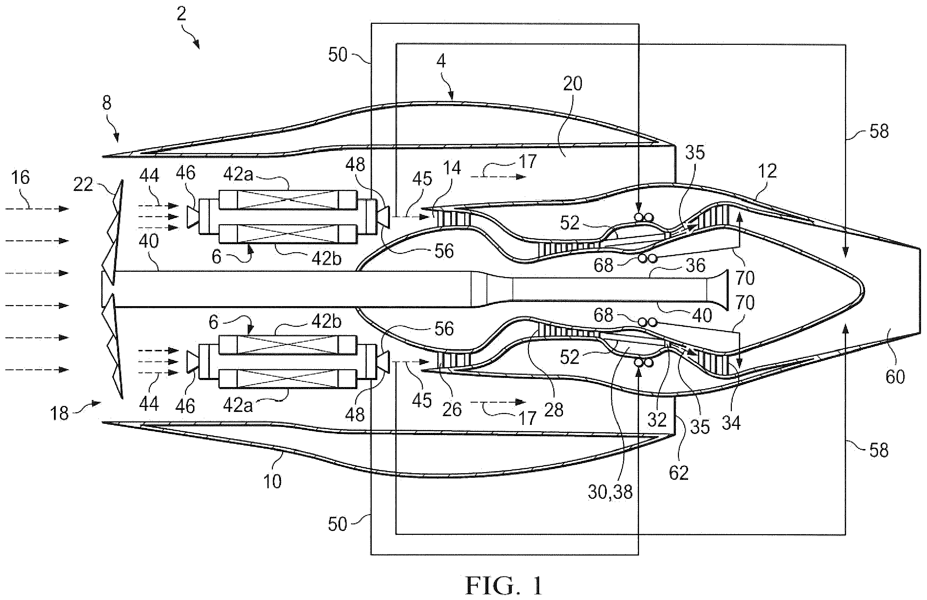

An embodiment **2** of the jet engine assembly provided by the present invention is illustrated in Fig. 1. The inventive jet engine assembly **2** preferably comprises a jet engine **4** and one or more, preferably four, pressure swing adsorption units **6** positioned in an extended forward air intake section **8** of the engine **4**.

Although it will be understood that generally any type of jet engine can be used in the inventive jet engine assembly **2**, the jet engine **4** shown in the embodiment of Fig. 1 is a modified high bypass engine which comprises: an outer nacelle housing **10** having an extended forward air intake section **8** as mentioned above; an inner engine housing **12** having a forward air intake **14** which preferably receives from about 10% to about 20% of the air flow **16** which enters the forward intake end **18** of the outer housing **10**; an air flow annulus **20**, formed between the inner housing **12** and the outer housing **10**, through which the remainder **17** of the total air intake **16** travels; and an air intake fan **22** rotatably positioned at or within the forward end of the extended forward intake section **8** of the outer housing **10**.

Positioned within the inner housing **12** of the jet engine **4** are: a low pressure air intake compressor **26** located within the forward air intake **14** end of the inner housing **12**; a high pressure air intake compressor **28** located rearwardly of the low pressure compressor **26**; a combustion chamber **30** located rearwardly of the high pressure air compressor **28** in a central combustion section **38** of the inner housing **12**; a high pressure exhaust turbine **32** located rearwardly of the combustion chamber **30**; and a low pressure exhaust turbine **34** located rearwardly of the high pressure turbine **32**. Jet fuel is delivered to the combustion chamber **30** by a set of spray nozzles (not shown). The high pressure exhaust turbine **32** and the low pressure exhaust turbine **34** are driven (i.e., rotated) by the combustion exhaust stream **35** which flows from the combustion chamber **30**.

The high pressure exhaust turbine **32** and the high pressure air intake compressor **28** are mounted on opposite end portions of a hollow, high pressure drive shaft **36** which extends through the central combustion section **38** of the inner housing **12**. As the high pressure exhaust turbine **32** is driven by the combustion exhaust stream **35** flowing from the combustion chamber **30**, the high pressure exhaust turbine **32** rotates the high pressure drive shaft **36**, which in turn drives the rotation of the high pressure intake compressor **28**.

Similarly, the low pressure exhaust turbine **34** and the low pressure air intake compressor **26** are mounted on a low pressure drive shaft **40** which extends through and rotates independently within the hollow, high pressure drive shaft **36**. As the low pressure exhaust turbine **34** is driven by the exhaust stream **35** exiting the high pressure exhaust turbine **32**, the low pressure exhaust turbine **34** rotates the low pressure drive shaft **40**, which in turn drives the rotation of the low pressure intake compressor **26**.

In addition, the air intake fan **22** is also mounted on a forwardly extending portion **40** of the low pressure drive shaft **40** which extends through and rotates independently within the hollow, high pressure drive shaft **36**. Consequently, the rotation of the low pressure exhaust turbine **34** produced by the exhaust flow **35** from the combustion chamber **30** also drives the rotation of the air intake fan 22 within the extended forward air intake section **8** of the outer housing **10**.

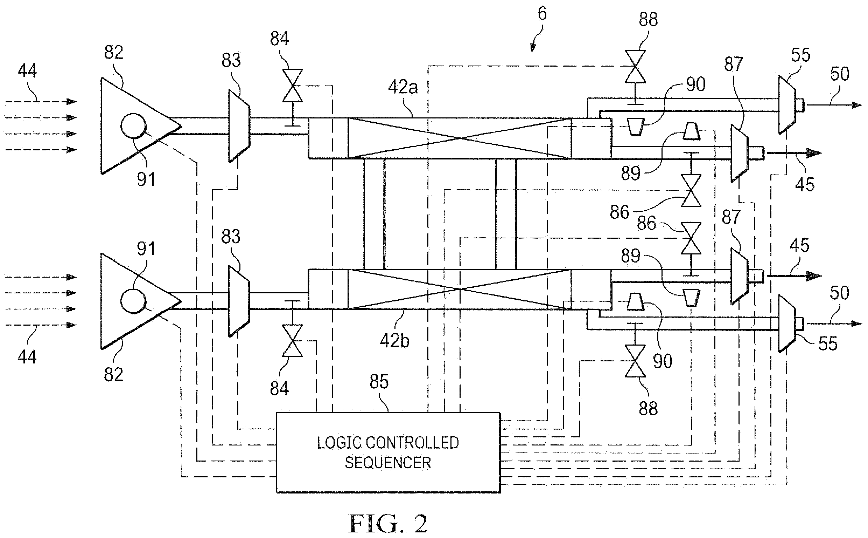

An embodiment of the one or more pressure swing adsorption units 6 used in the inventive jet engine assembly **2** is illustrated in Fig. 2. The one or more pressure swing adsorption units 6 used in the inventive assembly **2** are positioned in the extended forward air intake section **8** of the jet engine **4,** rearwardly of the air intake fan **22**. Each of the pressure swing adsorption units **6** comprises at least two (preferably four) cylindrical canisters or other containers **42a** and **42b** having an adsorption media therein for removing nitrogen from an incoming pressurized air stream **44**. A ram air intake regime created by the forward motion of the jet engine **4** and by the rotation of the air intake fan **22** is used to pressurize the air stream **44** and deliver the pressurized air stream **44** to the forward inlet end **46** of each of the pressure swing adsorption units **6**.

In each of the pressure swing adsorption units **6**, the removal of nitrogen from the pressurized air stream **44** entering the adsorption unit **6** produces an oxygen-rich product stream **45** which is preferably discharged directly, on a continuous or substantially continuous basis, from the rearward discharge end **48** of the adsorption unit **6** into the forward air intake **14** end of the inner housing **12** of the jet engine **4**. The one or more pressure swing adsorption units **6** are preferably sized and configured such that, in total, the additional volume of the oxygen-rich product stream(s) **45** added to the combustion mixture by the one or more adsorption units **6** will be the range of from about 3% to about 7% by volume, more preferably from about 4% to about 6%, of the volume of air alone. The adsorption media used in the containers **42a** and **42b** of each pressure swing adsorption unit **6** will preferably be an aluminosilicate material and will most preferably be zeolite, a porous stone material which acts as a molecular sieve. Under pressure, the zeolite or other aluminosilicate material removes nitrogen from an incoming pressurized air stream **44** to produce the oxygen-rich product steam **45**. However, when the pressure is released, the nitrogen desorbs from the adsorption media and is preferably used in the inventive jet engine assembly **2** for producing increased thrust as will be discussed below.

As will be understood by those in the art, the atmospheric air flowing into the pressure swing adsorption unit(s) **6** will have an oxygen content of approximately 21 % by volume and a nitrogen content of approximately 78% by volume. The adsorption media used in the pressure swing adsorption units **6** will preferably be effective for removing an amount of nitrogen from the incoming air stream such that the oxygen content of oxygen-rich product stream(s) **45** exiting the pressure swing adsorption unit(s) **6** adds at least an additional 3% by volume, more preferably at least an additional 5% by volume, of additional oxygen to the amount of air used during cruise operation. The nitrogen content of the oxygen rich product stream(s) **45** will preferably be less than 10% by volume.

The adsorption media used in the containers **42a** and **42b** of each pressure swing adsorption unit **6** will preferably be an aluminosilicate material and will most preferably be zeolite, a porous stone material which acts as a molecular sieve. Under pressure, the zeolite or other aluminosilicate material removes nitrogen from an incoming pressurized air stream **44** to produce the oxygen-rich product steam **45.** However, when the pressure is released, the nitrogen desorbs from the adsorption media and is preferably used in the inventive jet engine assembly **2** for producing increased thrust as will be discussed below.

The at least two adsorption media containers **42a** and **42b** of each pressure swing adsorption unit 6 are continuously cycled, out of phase, between a high pressure (nitrogen adsorption) operating mode and a low pressure (nitrogen desorption) operating mode. Consequently, during a first stage of the pressure swing operation cycle, while the container **42a** is operating in the high pressure nitrogen adsorption mode to remove nitrogen from the incoming air stream **44** and thereby produce the oxygen-rich product stream **45**, the other container **42b** will be operating in the low pressure regeneration mode to desorb the nitrogen from the adsorption media in the container **42b** to produce a nitrogen product stream **50** which is used for providing increased thrust. Next, during a second stage of the pressure swing operation cycle, the incoming pressurized air stream **44** is diverted to the now regenerated adsorption media container **42b** to continue the production of the oxygen-rich product stream **45** while the pressure in the adsorption media container **42a** is released to regenerate the adsorption media therein and continue the production of the nitrogen product stream **50.**

The nitrogen product stream **50** produced by each of the one or more pressure swing adsorption units **6** is conducted by a pump or compressor **55** into a duct or a spiral tube **68** around the combustion chamber **30** and is heated. The duct or spiral tube **68** preferably delivers the heated nitrogen via conduit **70** rearwardly downstream of the internal low pressure exhaust turbine **34.** Heating the nitrogen within a fixed space increases its pressure and velocity, which then also supplements the rearward mass flow and velocity of the combined gases flowing from the discharge end of the jet engine **4** to provide increased thrust.

Alternatively, the nitrogen product stream **50** can be delivered by the pump or compressor **55** through interior ducts **52** which extend though the combustion chamber **30** such that the nitrogen product stream **50** combines with the exhaust **35** from combustion chamber **30** to provide increased thrust.

The thrust produced by the jet engine **4** results from a combination of (a) the discharge of the hot combustion gases from the tapered discharge nozzle **60** formed at the rearward end of the inner housing 12 of the engine **4**, (b) the discharge of the air by-pass stream **17** and (c) the heated, expanded nitrogen product stream **50** delivered by spiral tube **68** via conduit **70** to the rearward end of low pressure exhaust turbine **34**.

The benefit of adding the heated nitrogen product stream **50** to the engine exhaust stream 35 is to maintain and preferably increase the amount of thrust produced by the jet engine **4** in accordance with the following thrust equation:

$$\text{Thrust} = (M_e \times V_e) - (M_o \times V_o)$$

wherein the Thrust produced by the jet engine is equal to the difference between (a) the product of the mass flow rate ($M_e$) times the velocity ($V_e$) of the gases which are discharged from the rearward end of the engine minus (b) the product of the mass flow rate ($M_o$) times the velocity ($V_o$) at the forward air intake end of the engine. By way of example, in the inventive jet engine assembly and method, a 5% increase in volume from the $O_2$ stream results in a 35% increase in thrust and dictates a 5% increase in velocity due to the area being fixed.

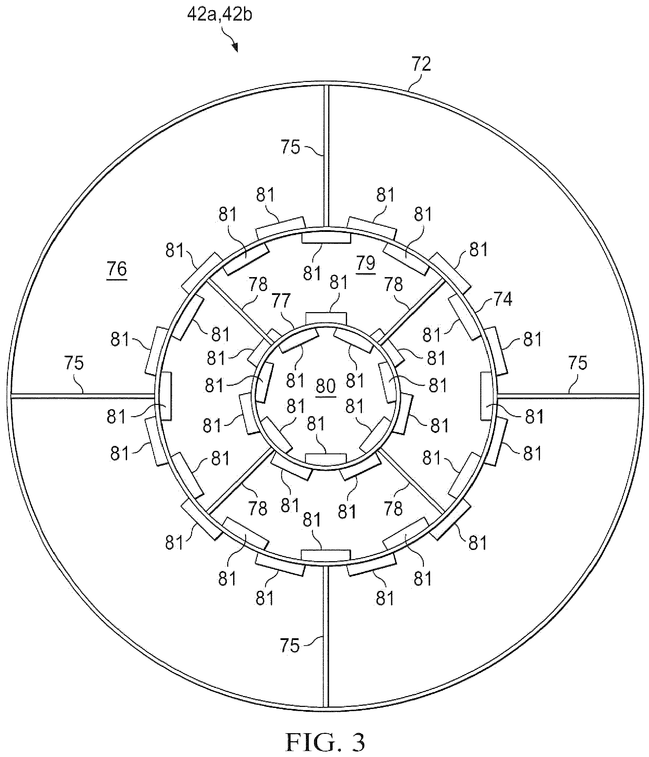

As illustrated in Fig. 3, each of the adsorption media containers **42a** and **42b** preferably comprises: an outer cylindrical housing **72**; an intermediate cylinder **74** which is held in the cylindrical housing **72** by radial struts **75;** an outer flow annulus **76** between the housing **72** and the intermediate cylinder **74**; an inner cylinder **77** which is held in the intermediate cylinder **74** by radial struts **78**; an inner flow annulus **79** which is formed between the intermediate cylinder **74** and the inner cylinder **77;** a flow passage **80** extending through the inner cylinder **77**; and a plurality of slats or strips **81**, or coatings, of the aluminosilicate or other adsorption material extending longitudinally along the inner and outer surfaces of the inner and intermediate cylinders **77** and **74**.

Fig. 2 illustrates that, at the inlet of the adsorption media containers **42a, 42b,** an air funnel **82** is preferably provided to act as an air catchment device to accommodate the ram-air regime provided by the aircraft movement. Pumps or compressor **83** are also preferably provided in the inlets to push the air from the funnels **82** into the containers **42a, 42b.** Control valves **84** following the pumps or compressors **83** are opened and closed by a logic sequencer **85,** which may also turn the pumps or compressors **83** off and on for shifting between the nitrogen adsorption and desorption cycles. For the adsorption cycle, the sequencer **85** also opens the oxygen discharge control valve 86 and turns on the oxygen discharge pump or compressor **87** that pushes the oxygen-rich product stream **45** directly to intake of low pressure compressor **26** of the jet engine **4.** Then, for the desorption cycle, the sequencer **85** closes the oxygen discharge control valve **86,** turns off the oxygen pump or compressor **87,** opens the nitrogen discharge control valve **88,** and turns on the nitrogen pump or compressor **55.** As noted above, the nitrogen discharge pump or compressor **55** pushes the nitrogen stream **50** into the tube or duct **68** provided around the combustion chamber **30** of the jet engine **4** for heating the nitrogen stream **50** prior to injecting the nitrogen stream **50** into the engine exhaust flow. Next, when returning to the adsorption cycle, the sequencer **85** closes the nitrogen control valve **88,** turns off the nitrogen pump or compressor **55,** opens the inlet air control valve **84,** and starts the inlet air pump or compressor **83.** The sequencer **85** also preferably allows the inlet air pump or compressor **83** and control valve **84** to push a minimum amount of air into the adsorption media container **42a** or **42b** for quick evacuation of the nitrogen from the containers. Check valves, flow diodes, or other suitable means (not shown) are also preferably provided as needed to prevent reverse flow through the containers **42a** and **42b.**

If the pressure swing adsorption unit **6** comprises two adsorption media containers **42a** and two adsorption media containers **42b,** the sequencer **85** will preferably cycle the containers **42a** out-of-phase with the containers **42b** so that when with the containers **42a** are in the adsorption cycle, the containers **42b** will be operating in the desorption cycle and vice versa.

A sensor and bleed assembly **89** for the oxygen stream **45** and a sensor and bleed assembly **90** for the nitrogen stream **50** are also preferably provided to control the volume of oxygen and nitrogen by providing blow-by when required. Further, sensor and bleed assemblies **91** mounted on the inlet air funnel collectors **82** provide blow-by to relieve stress when required.

To further increase the thrust produced by the jet engine **4,** a slip stream **58** of the $O_2$-rich product produced by the one or more pressure swing adsorption units **6** can also optionally be delivered to the discharge of the jet engine **4** to oxidize any uncombusted or partially combusted fuel in the exhaust stream to produce an afterburner effect.

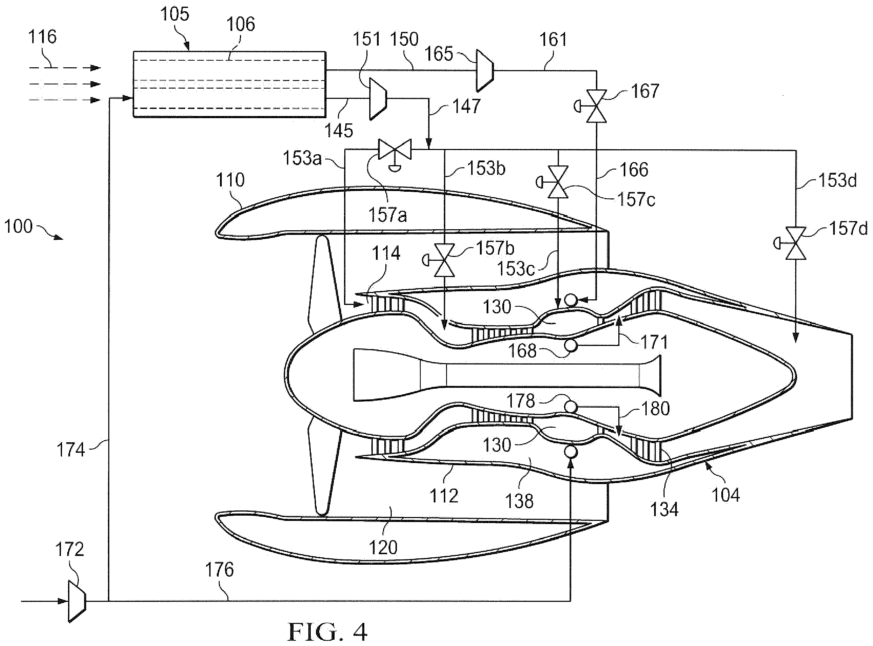

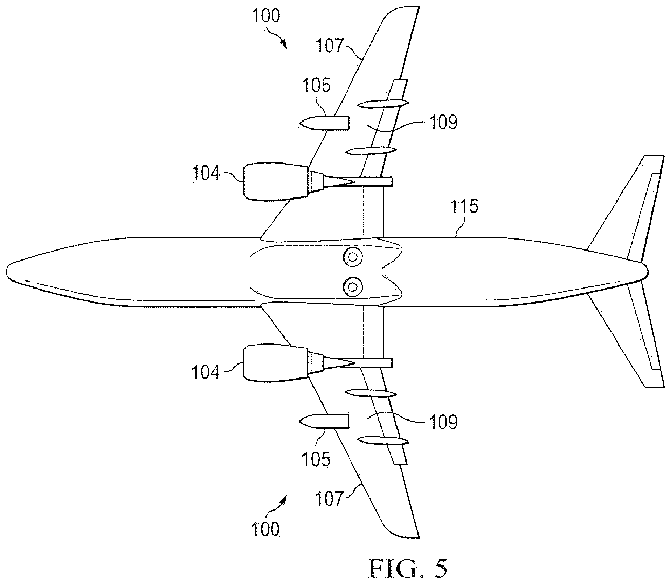

An alternative embodiment **100** of the inventive jet engine assembly is illustrated in Figs. 4 and 5. The inventive engine **assembly 100** is similar to the inventive engine assembly **2** except that the one or more pressure swing adsorption units **106** used in the inventive assembly **100** are not positioned in a forward extension of the outer housing **110** of the jet engine **104.** Rather, the adsorption units **106** are housed within pods **105** which are secured, for example, on the undersides **109** of the wings 107 of a commercial aircraft **115.** The pressure swing adsorption pods **105** are preferably spaced apart from the jet engines 104 and are also preferably slung on pylons so that the pods **105** are spaced downwardly from the undersides **109** of the wings **107.**

As with the adsorption units **6,** a ram air intake regime created by the forward motion of the pods **105** is used to provide a pressurized air stream **116** to the pressure swing adsorption units **106** contained therein. The pressure swing adsorption units **106** contained in each of the pods **105** adsorb nitrogen from the pressurized air stream 116 to produce a continuous or substantially continuous $O_2$-rich product stream 145 which is pumped for injection by a pump or compressor 151 via a conduit 147. The high pressure $O_2$-rich product 145 is then delivered (i) via a conduit 153a, as regulated by control valve 157a, to the forward air intake **114** of the inner housing **112** of the jet engine **104,** (ii) via a conduit **153b,** as regulated by control valve **157b,** into the inner housing **112** at a point ahead of the combustion chamber **130,** and/or (iii) via conduit **153**c, as regulated by control valve **157c,** into the engine combustion chamber **130.**

In addition, an amount of the $O_2$-rich product **145** will alternately be delivered preferably during takeoff via a conduit **153d,** as regulated by control valve **157d,** to the discharge of the jet engine **104** to oxidize any uncombusted or partially combusted fuel in the exhaust stream to produce an afterburner effect.

The nitrogen product stream **150** produced by the pressure swing adsorption units **106** contained in each of the pods **105** is pumped for injection via a conduit **161** by a nitrogen pump or compressor **165.** The pump or compressor **165** also assists in evacuating the adsorption unit containers operating in the desorption mode so that the low pressure nitrogen desorption process can occur.

In order to provide increased thrust, the pressurized nitrogen product **150** will preferably be delivered via conduit **166,** as regulated by control valve **167,** to a duct or tubing **168** which is coiled or otherwise positioned around the combustion chamber **130** and which delivers the heated nitrogen via conduit 171 rearwardly of the internal low pressure exhaust turbine **134.**

In addition to or as a replacement for the use of a ram air flow regime to supply pressurized air to the pressure swing adsorption pods **105,** the inventive jet assembly **100** can include a pump or compressor **172** which pumps outside air under pressure to the air intake of each of the pods **105** via a conduit **174.** As another alternative, the pressure swing adsorption units **106** used in the inventive jet engine assembly **100** can be identical to the pressure swing adsorption units **6** used in the inventive jet engine assembly **2.**

Alternatively or in addition, the pump or compressor **172** can pump outside air via a conduit **176** to a duct or tube **178** which coils or is otherwise positioned around the combustion chamber **130** for cooling the engine **104**. The duct **178** then delivers the heated outside air via a conduit 180 to a point ahead of the internal low pressure exhaust turbine **134** to provide increased thrust.

Thus, the present invention is well adapted to carry out the objects and attain the ends and advantages mentioned above as well as those inherent therein. While presently preferred embodiments have been described for purposes of this disclosure, numerous changes and modifications will be apparent to those in the art. Such changes and modifications are encompassed within this invention as defined by the claims.

Other aspects and features of the invention are set out in the following numbered clauses:

1. A method of operating a jet engine to increase fuel efficiency, increase thrust, or a combination thereof, wherein the jet engine is powered by combusting a mixture of fuel and air and the method comprises the steps of:

a) producing an oxygen-rich product from air using one or more pressure swing adsorption units which operate simultaneously with the jet engine and

b) delivering an amount of the oxygen-rich product to the jet engine such that the amount of the oxygen-rich product is added to the mixture of the fuel and air for combusting the fuel.

2. The method of clause 1 wherein the one or more pressure swing adsorption units is/are positioned in an outer housing of the jet engine.

3. The method of clause 1 further comprising delivering outside air (i) through one or more ducts or tubes positioned around a combustion chamber within an inner housing of the jet engine wherein the outside air is heated, (ii) into the inner housing between the combustion chamber and a low pressure exhaust turbine, or (iii) a combination thereof.

**Claims**

**1.** A jet engine assembly comprising:

one or more pressure swing adsorption units which produce an oxygen-rich product from air and

a jet engine which comprises

an outer housing having a forward air-intake end,

an inner engine housing having at least a forward portion which is positioned within the outer housing, the inner engine housing further comprising (i) an air intake at a forward end of the inner engine housing and (ii) an internal combustion chamber within the inner engine housing;

a by-pass air flow annulus formed between the inner engine housing and the outer housing, and

an assembly within the inner engine housing comprising (i) a low pressure compressor and a high pressure compressor which are positioned forwardly of the internal combustion chamber and (ii) a high pressure exhaust turbine and a low pressure exhaust turbine which are positioned rearwardly of the internal combustion chamber,

wherein the jet engine assembly is configured to deliver the oxygen-rich product produced by the one or more pressure swing adsorption units (i) into the air intake of the inner engine housing, (ii) into the inner engine housing forwardly of the internal combustion chamber, (iii) into the internal combustion chamber, or (iv) a combination thereof.

**2.** The jet engine assembly of claim 1 wherein the one or more pressure swing adsorption units is/are positioned forwardly of the air intake of the inner engine housing within a forwardly extending section of the outer housing.

**3.** The jet engine assembly of claim 2 wherein the one or more pressure swing adsorption units is/are positioned rearwardly of an air intake fan which is positioned within a forward end of the outer housing.

**4.** The jet engine assembly of claim 1 wherein the one or more pressure swing adsorption units is/are positioned outside of the outer housing of the jet engine and the jet engine assembly further comprises one or more conduits for delivering the oxygen-rich product produced by the pressure swing adsorption units (i) into the air intake of the inner engine housing, (ii) into the inner engine housing forwardly of the internal combustion chamber, (iii) into the internal combustion chamber, or (iv) a combination thereof.

**5.** The jet engine assembly of any preceding claim wherein the jet engine assembly is configured to deliver a nitrogen product produced by the one or more pressure swing adsorption units (i) through one or more interior ducts within the inner engine housing extending through the combustion chamber, (ii) through one or more ducts or tubes positioned around the combustion chamber, (iii) into the inner engine housing between the combustion chamber and the low pressure exhaust turbine, or (iv) a combination thereof.

6. The jet engine assembly of any preceding claim wherein the jet engine assembly is also configured to deliver a portion of the oxygen-rich product produced by the one or more pressure swing adsorption units to an exhaust discharge of the jet engine to oxidize uncombusted and/or partially combusted fuel to produce an afterburner effect.

7. The jet engine assembly of any preceding claim wherein the one or more pressure swing adsorption units is/are carried beneath a wing on a commercial aircraft.

8. The jet engine assembly of any preceding claim further comprising one or more pumps or compressors which pump outside air (i) to an air intake of each of the one or more pressure swing adsorption units, (ii) to one or more ducts or tubes positioned around the combustion chamber, (iii) into the inner engine housing between the combustion chamber and the low pressure exhaust turbine, or (iv) a combination thereof.

9. A method of operating a jet engine to increase fuel efficiency, increase thrust, or a combination thereof, wherein the jet engine is powered by combusting a mixture of fuel and air and the method comprises the steps of:

   a. producing an oxygen-rich product from air using one or more pressure swing adsorption units which operate simultaneously with the jet engine and
   b. delivering an amount of the oxygen-rich product to the jet engine such that the amount of the oxygen-rich product is added to the mixture of the fuel and air for combusting the fuel.

10. The method of claim 9 wherein the oxygen-rich product produced in step (a) comprises less than 10% by volume of nitrogen.

11. The method of claim 10 wherein the air used to combust the fuel is a volumetric amount of air and the amount of the oxygen-rich product delivered to the jet engine in step (b) is a volumetric amount which is from about 4% to about 6% of the size of the volumetric amount of air.

12. The method of any of claims 9 to 11 wherein, in step (b), the amount of oxygen-rich product is delivered (i) into an air intake of an inner housing of the jet engine, (ii) into the inner housing forwardly of an internal combustion chamber of the jet engine, (iii) into the internal combustion chamber, or (iv) a combination thereof.

13. The method of any of claims 9 to 12 wherein the one or more pressure swing adsorption units is/are carried beneath a wing of a commercial aircraft.

14. The method of any of claims 9 to 13 further comprising the step of delivering a portion of the oxygen-rich product produced in step (a) to an exhaust discharge of the jet engine which oxidizes uncombusted and/or partially combusted fuel to produce an afterburner effect.

15. The method of any of claims 9 to 14 further comprising:

   producing a nitrogen product using the one or more pressure swing adsorption units and using the nitrogen product to provide increased thrust by delivering an amount of the nitrogen product (i) through one or more interior ducts extending through a combustion chamber within an inner housing of the jet engine, (ii) through one or more ducts or tubes which is/are positioned around the combustion chamber, (iii) into the inner housing between the combustion chamber and a low pressure exhaust turbine, or (iv) a combination thereof.

FIG. 1

FIG. 2

FIG. 3

FIG. 4

FIG. 5

Europäisches
Patentamt

European
Patent Office

Office européen
des brevets

# EUROPEAN SEARCH REPORT

**Application Number**

EP 20 16 9868

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 106 677 923 A (WANG ZHOU) 17 May 2017 (2017-05-17) * figure 1 * * paragraph [0006] * ----- | 1,9,12 | INV. F02C3/22 F02C3/30 |
| Y | US 2016/368614 A1 (ENDRES STEVEN P [US]) 22 December 2016 (2016-12-22) * figures 6,7 * * paragraphs [0041], [0043] * ----- | 1,4,5,9, 12,15 | |
| Y | US 2017/370291 A1 (RAMBO JEFFREY DOUGLAS [US]) 28 December 2017 (2017-12-28) * paragraph [0035] * ----- | 1,4,5,9, 12,15 | |
| A | US 5 131 225 A (ROETTGER BELINDA F [US]) 21 July 1992 (1992-07-21) * figure * * column 6, line 45 - line 47 * ----- | 1-15 | |

| | TECHNICAL FIELDS SEARCHED (IPC) |
|---|---|
| | F02C |

The present search report has been drawn up for all claims

| Place of search | Date of completion of the search | Examiner |
|---|---|---|
| The Hague | 3 September 2020 | Angelucci, Stefano |

EPO FORM 1503 03.82 (P04C01)

## ANNEX TO THE EUROPEAN SEARCH REPORT
## ON EUROPEAN PATENT APPLICATION NO.

EP 20 16 9868

This annex lists the patent family members relating to the patent documents cited in the above-mentioned European search report.
The members are as contained in the European Patent Office EDP file on
The European Patent Office is in no way liable for these particulars which are merely given for the purpose of information.

03-09-2020

| Patent document cited in search report | | Publication date | Patent family member(s) | | Publication date |
|---|---|---|---|---|---|
| CN 106677923 | A | 17-05-2017 | NONE | | |
| US 2016368614 | A1 | 22-12-2016 | US 2016368614 A1 | | 22-12-2016 |
| | | | US 2018163632 A1 | | 14-06-2018 |
| US 2017370291 | A1 | 28-12-2017 | CA 3028661 A1 | | 04-01-2018 |
| | | | CN 109328259 A | | 12-02-2019 |
| | | | EP 3475546 A1 | | 01-05-2019 |
| | | | JP 2019527313 A | | 26-09-2019 |
| | | | US 2017370291 A1 | | 28-12-2017 |
| | | | WO 2018004802 A1 | | 04-01-2018 |
| US 5131225 | A | 21-07-1992 | NONE | | |

For more details about this annex : see Official Journal of the European Patent Office, No. 12/82